# EUROPEAN PATENT APPLICATION

(11) **EP 4 537 916 A1**
(43) Date of publication of application: **16.04.2025**
(21) Application number: 24204534.2
(22) Date of filing: 03.10.2024
(51) Int. Cl.: A63F 13/54, G10K 15/02, H04S 7/00

(54) **SIMULATING AUDIO SIGNALS**

(30) Priority: 04.10.2023 GB 202315204
(71) Applicant: Sony Interactive Entertainment Europe Limited, London W1F 7LP (GB)
(72) Inventor: JONES, Michael Lee, London, W1F 7LP (GB); BUCHANAN, Christopher George, London, W1F 7LP (GB); ARMSTRONG, Calum, London, W1F 7LP (GB); SMITH, Alexei Ashton Derek, London, W1F 7LP (GB); PILATAKI MANIKA, Maria, London, W1F 7LP (GB)
(74) Representative: Gill Jennings & Every LLP

(57) **Abstract**

A computer implemented method of simulating audio signals in a virtual environment, wherein the virtual environment comprises a first room comprising an audio source, a second room comprising an audio receiver, and a third room in-between the first and second rooms, the method comprising: simulating the propagation of an audio signal in the first room and outputting the simulated audio signal to the third room; modifying the simulated audio signal by a predetermined function; generating a modified audio signal and outputting the modified audio signal to the second room.

## Description

### FIELD OF THE INVENTION

The present invention relates to methods of simulating and generating audio signals in a virtual environment.

### BACKGROUND

Modern virtual environments, such as video game environments, are programmed such that physical phenomena that occur in reality are closely replicated in simulations. For example, video game environments are programmed to mirror the acoustic behaviours of real environments, such that sounds propagate in a manner akin to that in reality.

Depending on the complexity of the virtual environment, reproducing virtual sounds and acoustic behaviours can be very computationally expensive in terms of both time and resources used. This can make it difficult to accurately replicate physical phenomena in virtual environments effectively in real-time.

It is an object of the invention to make progress in overcoming these issues.

### SUMMARY OF INVENTION

According to a first aspect there is provided a computer implemented method of simulating audio signals in a virtual environment, wherein the virtual environment comprises a first room comprising an audio source, a second room comprising an audio receiver, and a third room in-between the first and second rooms, the method comprising: simulating the propagation of an audio signal in the first room and outputting the simulated audio signal to the third room; modifying the simulated audio signal by a predetermined function; and generating a modified audio signal and outputting the modified audio signal to the second room.

This method involves modifying the simulated audio signal by a predetermined function. By using a predetermined function, this computation does not need to be does in real-time but instead can be done ahead of when the modification is required. In addition, the predetermined function can be used to modify any simulated audio signal and the function does not need to be recalculated each time. The output audio signal which is generated based on the modified audio signal can therefore be generated more efficiently, by using a predetermined signal instead of real-time calculations, and so the overall process is more computational efficient in terms of time and resources used.

The predetermined function may correspond to the acoustic response of the third room. Preferably, the third room is a substantially acoustically stationary room. This means that the third room does not have a perceptively changing effect on the audio signals that propagate through the third room. Once the effect of the third room on audio signals has been determined, this effect is effectively static with time and so it does not need to be recalculated. Given that the impact of the third room on audio signals remains substantially constant over time, the predetermined function only needs to be calculated once and can then be applied to any audio signal as necessary. By "substantially acoustically stationary" and "effectively static", and similar terms, we mean that the room is approximated to be acoustically static. In reality, the room may slightly change acoustically over time, for example if the sun moves over a window then the temperature of the room changes which changes the acoustic response of the room slightly. However, these small changes will typically not make any noticeable, perceptual difference and so in such cases it is sufficient to approximate the room as being acoustically stationary.

Since the predetermined function does not need to be calculated in real-time, because it does not change with time, a more accurate determination of the acoustic response of the third room can be calculated, because all reflections and reverbs within the third room can be taken into account as computational time and resources are not limited. A more accurate determination of the predetermined function leads to a more accurately generated output audio signal and improve audio quality overall.

Modifying the input audio signal may comprise convolving the input audio signal with a response signal, wherein the response signal corresponds to an acoustic response of the third room.

In some examples, each of the first room, the second room, and third rooms are discrete rooms that are distinct from each other. In other words, each room can be clearly defined and separated from another room. The rooms are not general areas within a space that merge into each other with undefined boundaries.

The first room, the second room, and the third room may be linearly arranged. Preferably, the first room is adjacent the third room and the second room is adjacent the third room.

There may be a portal between the first room and third room such that audio signals can propagate from the first room to the third room through the portal. There may be a portal between the third room and the second room such that audio signals can propagate from the third room to the second room through the portal. A portal may be considered as any passage or gap which allows audio signals to travel from one room to another room. A door may be an example of a portal.

According to another aspect there may be provided a data processing system comprising a processor configure to perform the method as described above.

According to another aspect there is provided a computer program comprising instructions which, when the program is executed by a computer, cause the computer to carry out the method as described above.

### BRIEF DESCRIPTION OF DRAWINGS

The present invention will now be described by way of example of with reference to the accompanying drawings in which:
Figure 1 is a schematic diagram of a virtual environment; and
Figure 2 is a flow diagram of a method.

### DETAILED DESCRIPTION

When simulating audio in a virtual space, the original audio signal bounces off objects and surfaces within the virtual environment before reaching the user and so the audio signal that is heard by a user is effectively a modified version of the original audio signal.

The extent by which the original audio signal is modified by the virtual environment is determined by an impulse response. The impulse response comprises the audio characteristics of the virtual environment that are imparted on the original audio signal as the audio signal propagates through the virtual environment. The impulse response includes the effect any surfaces and objects within the virtual environment that the audio signal will encounter within the virtual environment.

The implies response can be generated by playing an audio signal from an audio source in an environment (e.g. a room), the resulting sound being referred to as an impulse. This impulse provides a snapshot of the environment's ambience based on the acoustics of the environment. The resulting sound can be recorded (e.g. using a microphone) and the effect of the environment of the original audio signal can be determined.

By editing out or removing the initial impulse from the captured sound recording, the acoustic response of the environment can be determined. The acoustic response is effectively just the signal of the environment, indicating how the environment modifies audio signals played within it. The acoustic response does not include other audio signals that may exists within the environment.

By knowing the acoustic response of a particular environment (for example a room within a video game) it is possible to modify an audio signal generated by an audio source so that the resulting audio sound accurately replicates what a user would hear within a real-world equivalent of the simulated environment.

A receiver placed in the same environment as the audio source will receive a signal comprised of the originally generated source audio signal modified by the acoustic response of the environment.

If either the source or the receiver moves, the acoustic response of the environment needs to be recalculated for the new source and / or receiver position. This means that during video gameplay as a user moves an avatar around the room, the user effectively representing a moving receiver, a large number of calculations need to be performed in real-time in order to accurately simulate what the avatar would "hear" at any given moment in the virtual environment. If the audio source is also moving, for example the audio source may be a moving vehicle, then the number of calculations needed to accurately simulate the audio signals received by the avatar in the environment get increasingly more numerous and more complex.

When the source and receiver are not in the same environment, for example the source is in a first room and the receiver is in a second room, before the signal is received by the receiver, the audio signal propagates through the both the first room and the second room. Thus, in this case, the original source signal is modified by both the acoustic response of the first room and the acoustic response of the second room.

The passageway (e.g. door) between the two rooms, also referred to as a portal, effectively provides a simplified acoustic 'view' from one room into another separate room. As an example, a virtual environment comprising three linearly adjacent rooms has a first door between the first and second rooms and a second door between the second and third rooms. Each of the first and second doors can be considered as first and second portals. From the perspective of any receiver in one of the rooms, for example the first room, the exact details of what is going on acoustically in each other room beyond the first room is largely irrelevant. The receiver in the first room simply hears a single complex audio source emanating from the portal in question (i.e. the portal between the first room and all subsequent rooms which can be considered collectively). In reality, the single complex audio source comprises one or more audio signals from one or more audio sources present in the second and / or third rooms, each signal from an audio source modified by the acoustic response of the rooms. Modelling the acoustic responses of all the rooms beyond the first room and computing the various audio signals and their propagation through these rooms until they reach the portal into the first room is therefore computationally expensive.

Environments in which there are no moving sources or objects that would affect the propagation of sound waves through the environment can be considered as acoustically stationary. Audio signals propagating through an acoustically stationary environment do not change and so the paths of the sound waves in the acoustically stationary environment do not need to be simulated and recalculated. The acoustic response of the acoustically stationary environment is therefore constant over time and so only needs to be calculated once. The calculation does not need to be repeated as there is nothing in the environment that would cause the acoustic response to change.

Any audio signal subsequently passing through the acoustically stationary environment can then simply be modified by the already-calculated acoustic response of the acoustically stationary environment, rather than doing calculations in real-time. This is computationally less intensive.

Within a propagation engine, audio sources can propagate through multiple rooms, spaces and portals. Typically, the engine may try to calculate some reflections / reverbs within each space. This may be required to be calculated at runtime as the position of the source and receiver is variable within the originating space and the receiving space. However, there are special cases where the propagating source passes through at least one middle-space. In this case, the acoustic response of the middle room is often stable and as such can be calculated offline with higher quality than can be achieved doing the calculation in real-time.

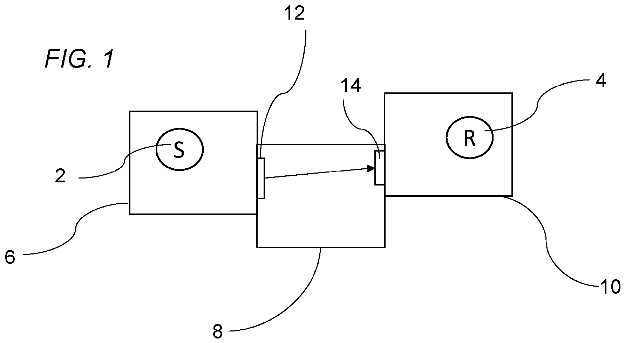

Considering the example above of three linearly adjacent rooms, with reference to Figure 1, an audio source 2 is located in a first room 6 and an audio receiver 4 is located in a third room 10. A second room 8 is located between the first room 6 and the third room 10, with two doors 12, 14 joining the rooms together. An audio signal generated at the audio source 2 travels through the first room 6, through the first door 12, through the second room 8, through the second door 14, and through the third room 10 to the audio receiver 4.

At least one of the audio source 2 and the audio receiver 4 are movable. As illustrated in Figure 1, the second room 8 is empty which means that there are no moving components in the room and no other audio sources that would affect the sound waves travelling through this room. In this example, the second room 8 is acoustically stationary.

In this example, the acoustic response of the first room 6 needs to be calculated in order to determine how the sound waves from the audio source travel through the first room 6 and through the first door 12 into the second room 8. However, since there is nothing in the second room 8 that changes with time, and so nothing that will have a time-changing effect on how the sounds waves will travel through the second room 8, the audio signal entering the second room 8 through the first door 12 can simply be modified by the acoustic response of the second room 8, which is constant with time, in order to determine the audio signal that will enter the third room 10 via the second door 14.

Effectively, the audio signal entering the second room 8 is multiplied by a function that represents the effect on the sound waves of the second room 8. Since the acoustic response of the second room 8 does not change with time, it does not need to be recalculated in real-time but can instead be calculated once initially. This means that the acoustic response of the second room 8 does not need to be calculated during gameplay but can instead be computed offline and applied during gameplay.

Computing the acoustic response offline provides a better, more accurate acoustic response to be calculated for a given environment because it is possible to take all reflections and interferences of the audio signal with itself and other objects in the environment into account. Doing this calculation offline rather than during gameplay also reduces the amount of processing carried out at run time.

The acoustic response of the first and third rooms 6, 10 needs to be done in real-time during gameplay as a result of the variable propagation of the source 2 and / or receiver 4 as a result of movement during the game. This places a limit on the complexity and the number of reflections that can be taken into account during these calculations, in order to avoid significantly affecting game performance.

The above method involves convolving a source audio signal with a predetermined acoustic response of an acoustically stationary environment to generate an audio signal that would be received by a receiver beyond the acoustically stationary environment.

The convolution may comprise multiplying the frequency spectra of the source signal and the acoustic response so that frequencies that are shared between the two will be accentuated, while frequencies that are not shared will be attenuated. It is this convolution that causes the source signal to take on the acoustic qualities of the environment to which the acoustic response belongs, because characteristic frequencies from the acoustic response common in the source signal are boosted. Convolution is therefore the process of imparting the acoustic characteristics of a physical space or object on those of another.

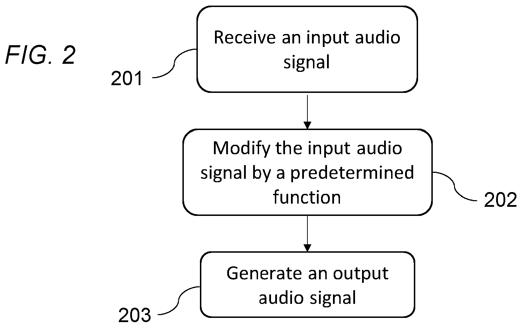

The above describe method can be summarised with reference to Figure 2. Firstly, an input signal is received 201. The input signal can be received at a point in the second room 8. The input signal corresponds to an audio signal coming from the first room 6 and that has travelled through the first door 12 into the second room 8. The input signal is modified by a predetermined function 202. The predetermined function is the acoustic response of the second room 8. An output signal is then generated based on the modified input signal 203. The output signal is sent from the second room 8 to the third room 10 through the second door 14.

The method described herein, whilst specific to acoustically stationary rooms, can significantly improve the audio quality of a source. As an example, consider a receiver (e.g. an avatar in a game) is stood just outside of a church, and an audio source (e.g. an organ) is output from a side-room within the church. In this case the main space within the church can be considered acoustically stationary. The audio propagation engine would compute the portal-input to the main church from the side-room, then that source would be convolved with a high-quality response of the reverberant space (i.e. the amin space in the church) and output through the portal-exit next to the receiver. This computational method saves computation time and resources, and improves the final audio quality.

## Claims

1. A computer implemented method of simulating audio signals in a virtual environment, wherein the virtual environment comprises a first room comprising an audio source, a second room comprising an audio receiver, and a third room in-between the first and second rooms, the method comprising:
simulating the propagation of an audio signal in the first room and outputting the simulated audio signal to the third room;
modifying the simulated audio signal by a predetermined function;
generating a modified audio signal and outputting the modified audio signal to the second room.

2. The method of claim 1 wherein the predetermined function corresponds to the acoustic response of the third room.

3. The method of claim 1 or 2 wherein the third room is a substantially acoustically stationary room.

4. The method of any preceding claim wherein modifying the simulated audio signal comprises convolving the simulated audio signal with a response signal, wherein the response signal corresponds to an acoustic response of the third room.

5. The method of any preceding claim wherein each of the first room, the second room, and third rooms are distinct from each other.

6. The method of any preceding claim wherein the first room, the second room, and the third room are linearly arranged.

7. The method of any preceding claim wherein the first room is adjacent the third room and the second room is adjacent the third room.

8. The method of any preceding claim wherein there is a portal between the first room and third room such that audio signals can propagate from the first room to the third room through the portal.

9. The method of any preceding claim wherein there is a portal between the third room and the second room such that audio signals can propagate from the third room to the second room through the portal.

10. A data processing system comprising a processor configure to perform the method of any of claims 1 to 9.

11. A computer program comprising instructions which, when the program is executed by a computer, cause the computer to carry out the method of any of claims 1 to 9.
